# EUROPEAN PATENT SPECIFICATION

(11) **EP 3 148 320 B1**
(45) Date of publication and mention of the grant of the patent: **09.10.2019**
(21) Application number: 15728784.8
(22) Date of filing: 28.05.2015
(51) Int. Cl.: A01G 9/029, A01G 9/00, A01G 22/63

(54) **SYSTEMS FOR CULTIVATING PLANTS WITH AERIAL ROOTS**
SYSTEME ZUM ZÜCHTEN VON PFLANZEN MIT LUFTWURZELN
SYSTÈMES DE CULTURE DE PLANTES À RACINES AÉRIENNES

(30) Priority: 28.05.2014 NL 2012907; 27.06.2014 BE 201400496
(43) Date of publication of application: 05.04.2017
(73) Proprietor: Floréac N.V., 9080 Lochristi (BE)
(72) Inventor: STEELANDT, Arne, 9000 Gent (BE)
(74) Representative: Paemen, Liesbet R.J.
(86) International application number: PCT/EP2015/061812
(87) International publication number: WO 2015/181278

(56) References cited:
- JP-A- H11 318 217
- US-A- 5 502 923
- US-A1- 2008 078 118
- US-A1- 2008 222 949
- US-A1- 2011 113 687
- US-A1- 2012 279 126

## Description

### FIELD OF THE INVENTION

The application relates to methods and tools for cultivating plants, more particularly systems and methods for cultivating plants with aerial roots.

### BACKGROUND OF THE INVENTION

Aerial roots are roots that are formed in and exposed to air. Commonly, they arise from the stem and either pass for some distance through the air before reaching the soil or remain hanging in the air. They are found in diverse plant species, including epiphytes such as orchids; tropical coastal swamp trees such as mangroves; the warm-temperate rainforest ra̅ta̅ (*Metrosideros robusta*) and po̅hutukawa (*M*. *excelsa*) trees of New Zealand; and also in vines like the common ivy (*Hedera helix*) or the poison ivy (*Toxicodendron radicans*).

This plant organ has different specializations that suit the plant habitat; one of the most common is that they assist in supporting the plant; but they can also enable certain plants (such as climbing plants), to become attached to rocks, bark, and other non-soil substrates. A large number of plants with aerial roots are of economic importance, mainly as ornamental plants. In order to propagate and grow these plants, they need to be planted in pots, often in trays that comprise more than one pot, in close proximity with each other.

A common problem which occurs with plants which possess aerial roots is that these tend to grow relatively long and in all directions in a short period of time. If for economic reasons the plants are placed close together in a substrate, their roots will become entangled, making it difficult to separate the plants at a later stage. Another problem is that young roots may be damaged when plants are transplanted. Yet another problem is that cultivated plants cannot be handed in an automated process.

Combinations of trays and cups for cultivating plants have been extensively described in the art. The cups used in this context are often conically shaped with a step-wise inclining inner surface which facilitates removal of the plantlet after growth (US2008/0222949, US 7,774,981, US4,753,037, US5,557,886). These are however not suitable for the cultivation of plants with aerial roots as they do not provide sufficient space for root growth. Similarly, systems which make use of open baskets (such as US2012/0279126, US5,502,923, JP09140282, US2008/0078118) or cups containing large apertures (US2012/0137581) are not suitable for cultivating plantlets of species with aerial roots as the roots are likely to extend into and/or outside the cup.

In view of the above, there remains a need in the art for an improved cultivation system for plants with aerial roots, which is simple, reliable, efficient, inexpensive and amenable to automation.

### SUMMARY OF THE INVENTION

The application provides improved systems and methods for the cultivation of plants with aerial roots. In particular embodiments, the methods and systems are simple, reliable, efficient, inexpensive and amenable to automation; in further particular embodiments the methods and systems solve one or more of the problems mentioned herein above, more particularly avoiding entanglement of roots of different plants and/or preventing damage of the roots during handling.

According to one aspect systems are provided for cultivating plants comprising a cultivating tray comprising two or more vases wherein each vase comprises one or more ridges extending circumferentially along the inner surface of the vase. Accordingly the application provides systems for cultivating plants comprising a cultivating tray (1) comprising two or more openings for vases (2), each vase (2) comprises one or more ridges (3) extending circumferentially along the inner surface of on the upper half part of said vase. More particularly, the ridge is a discrete structure which extends to a height of at least 1 mm from the surface of the vase.

In particular embodiments, the application provides systems for cultivating plants comprising a cultivating tray and at least two vases, wherein the tray comprising two or more openings for said vases, and wherein each vase comprises an inner surface which is essentially continuous and one or more ridges extending circumferentially along at least part of this inner surface, whereby each ridge is a discrete structure extending inwardly towards the center of the vase and forming an angle with the inner surface under the ridge. Indeed the angle under the ridge allows for the aerial roots to be guided within the vase horizontally. In particular embodiments, at least one ridge is located in the upper half of the vase's inner surface. Optionally the vase further comprises a ridge on the lower half of the vase's inner surface. In particular embodiments, the vase does not comprise other ridges on its inner surface, so as to not hinder further growth of the roots. In further particular embodiments of the systems provided herein at least on ridge of the vase has a parabolic shape.

In particular embodiments, the one or more ridges may each be a discrete structure extending to a height of at least 1mm from the vase's inner surface. More particularly the height of the ridge is between 2.5 and 3.5 mm, such as about 3mm. It has been found that this is sufficient to ensure guidance of the plantlet roots. In further particular embodiments, the height of the ridge is less than 5mm, more particularly less than 4 mm from the surface of the vase.

In particular embodiments, each of the vases consists of two parts which allows the vases to be opened longitudinally. In particular embodiments of the systems envisaged herein the bottom of said vases comprise one or more draining holes.

According to particular embodiments, the system further comprises one or more substrate holders for positioning in each vase. More particularly, the combination of vases and substrate holders is such that the diameter of said substrate holder is between 0.6 and 3.4 cm smaller than the diameter of said vase.

In particular embodiments, the substrate holder used in the systems envisaged herein has a net-like structure.

Typically, in the use of the systems envisaged herein, the substrate holder is filled with a loose substrate.

In particular embodiments, the vase comprises at least two ridges extending in parallel circumferentially along the inner surface of the upper half part of said vase. In further particular embodiments, the ridges run at an angle with the upper edge of said vase.

In particular embodiments of the systems envisaged herein, the openings of the trays form receptacles or cups for positioning a vase therein and the bottom of said cup and/or the bottom of said vase comprise an elevation feature for elevating the substrate holder above the bottom of the vase.

In particular embodiments of the systems envisaged herein the vase has a circular cross-section.

In particular embodiments of the systems envisaged herein, each vase comprises a collar with arms extending from the collar to form the bottom of said vase.

In particular embodiments the application thus provides vases for growing plants having aerial roots wherein a vase (2) comprises an inner surface (21) which is essentially continuous and one or more ridges (3) extending circumferentially along at least part of this inner surface (21), whereby each ridge is a discrete structure extending inwardly towards the center of said vase and forming an angle with the inner surface under the ridge. In particular embodiments the vase has a circular cross-section.

In a further aspect, the present invention defined by the appended claims, comprises cultivating trays. The cultivating tray is configured for use in a system according to the present invention, and configured for supporting two or more vases according to the present invention, wherein the cultivating tray comprises two or more cups (5) configured for supporting vases according to the present invention; the cultivating tray is configured for facilitating aeration and drainage of plants in vases according to the present invention.

In a further aspect, the present invention comprises the use of a system according to the present invention defined by the appended claims for growing epiphytes. More particularly these elements are of interest for growing plantlets in a substrate.

The application thus envisages the use of the system described herein for cultivating epiphytes. More particularly, the application provides methods for cultivating epiphytes, the method comprising the steps of placing a root of said epiphyte into a substrate holder, filling said substrate holder with substrate, and positioning said substrate holder in a vase of the system as envisaged herein. In particular embodiments, said vase consists of two parts and said method comprises the step of opening said vase (after cultivation of the plant to a desired size) to remove said substrate holder from said vase.

### BRIEF DESCRIPTION OF THE FIGURES

The following figures are provided merely as illustration of the invention and should not be considered to limit the scope thereof.

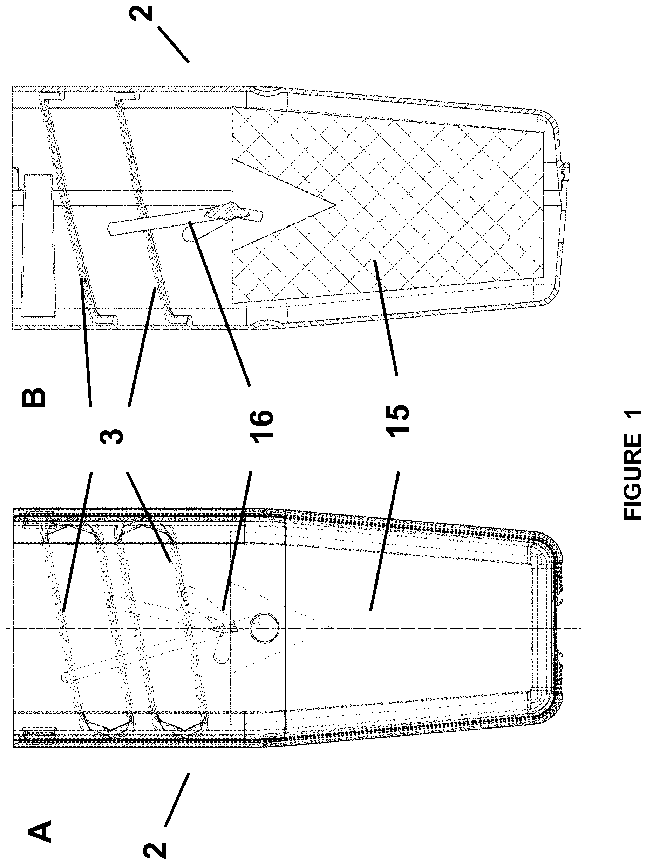

**Figure 1** illustrates a vase (2) for a cultivation system (1) according to a particular embodiment as envisaged herein. Figure 1A provides a frontal view through the vase, Figure 1B provides a front view of a transversal section of the vase. The vase (2) comprises a ridge (3) which extends circumferentially along the inner surface of the vase (2). In this particular embodiment, the ridge extends circumferentially along the inner surface of the vase at an angle with the upper edge (11) of the vase (2).

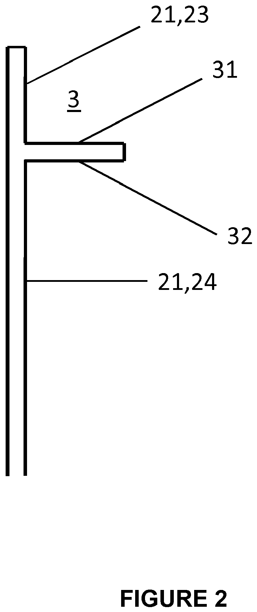

**Figure 2** illustrates a ridge (3) according to a particular embodiment envisaged herein having an upper surface (31) and a lower surface (32) whereby the ridge protrudes as a discrete element from the inner surface (21) from a vase (2) inwardly towards the center of said vase and forming an angle with the inner surface under the ridge (23).

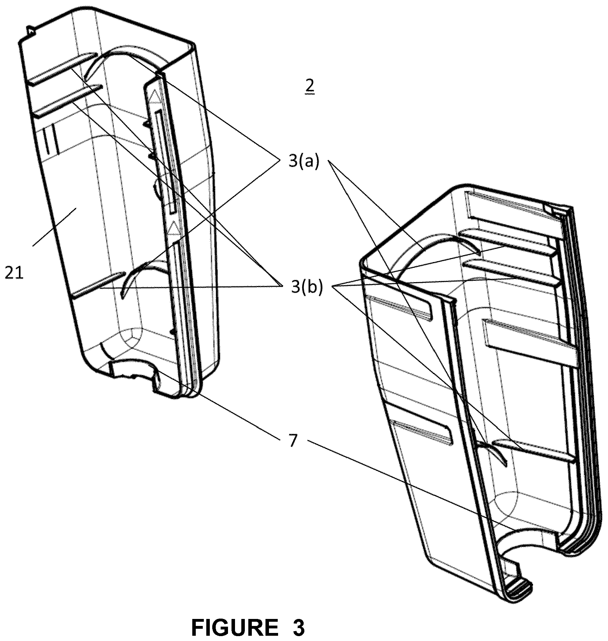

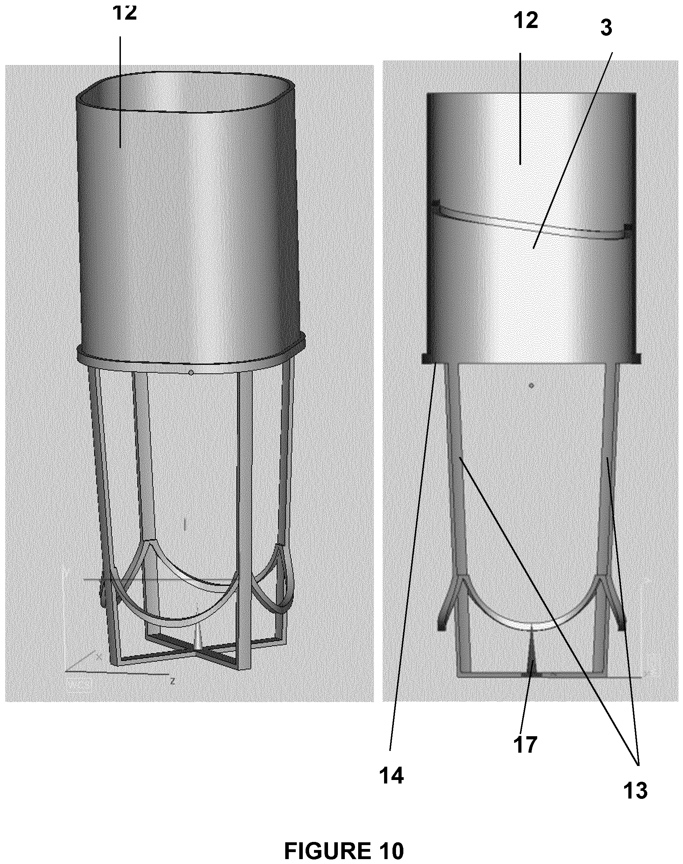

**Figure 3** illustrates a vase (2) according to a particular embodiment envisaged herein having four faces, of which two faces of the vase's inner hull comprise parabolic ridges (3(a)), and of which the remaining two faces of the vase's inner hull comprise substantially straight ridges **(3(b)).****Figure 10** **(A,B)** illustrates two interlocking parts (8,9) of a vase (2) according to a particular embodiment envisaged herein.

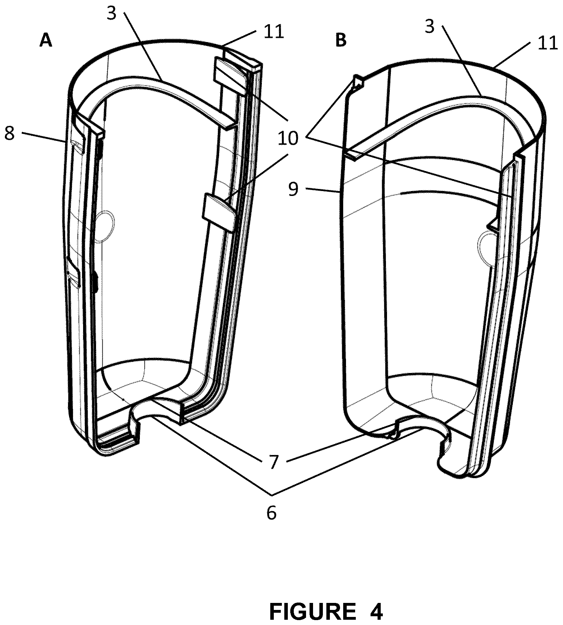

**Figure 4** **(A, B)** illustrates two parts (8,9) of a vase (2) according to a particular embodiment envisaged herein.

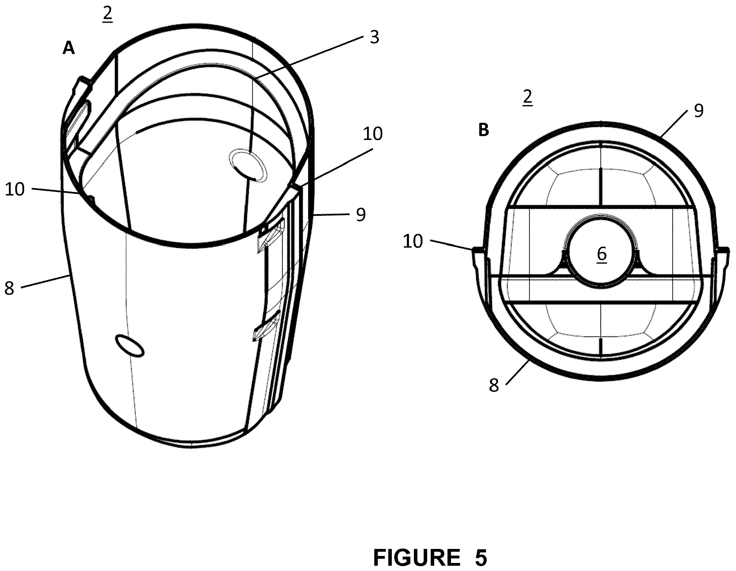

**Figure 5** **(A, B)** illustrates a vase (2) made up of two parts (8,9) according to a particular embodiment envisaged herein.

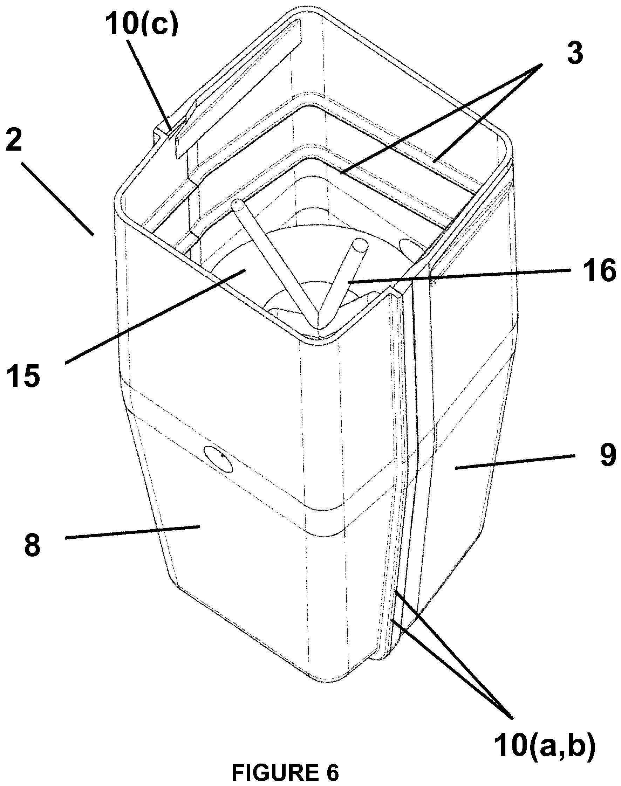

**Figure 6** illustrates a top view from an angle of a vase (2) according to a particular embodiment envisaged herein. The vase consists of two parts (8, 9) which are held together by locking features (10) which ensure a tight interlock.

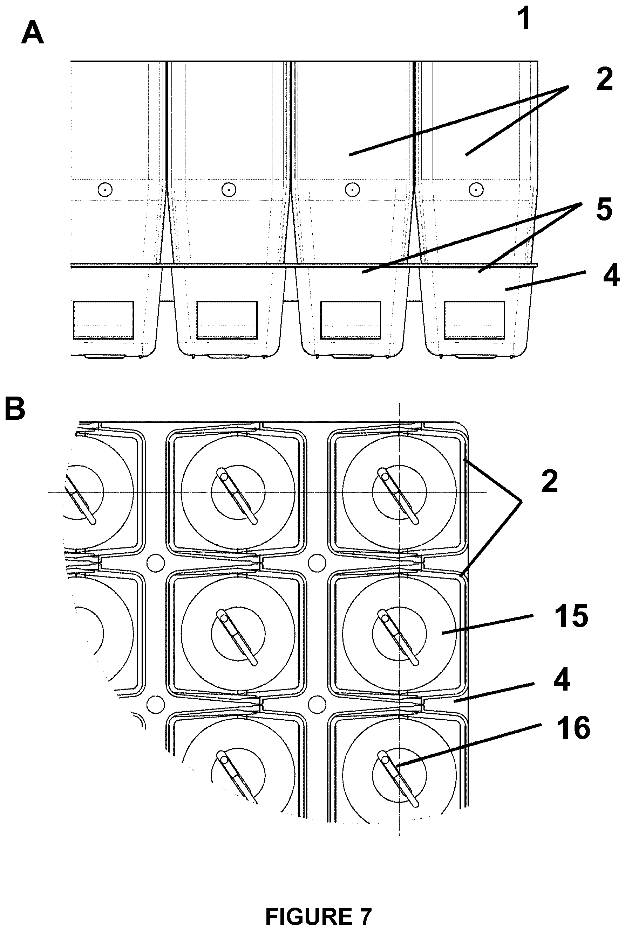

**Figure 7** illustrates a particular embodiment of a cultivation system (1) comprising vases (2) positioned within a tray (4). Figure 7A provides a frontal view, Figure 7B provides a top view.
The height of the vases (2) extends above the height of the tray (4). The substrate (15) with plant root (16) are illustrated schematically in Figure 7B.

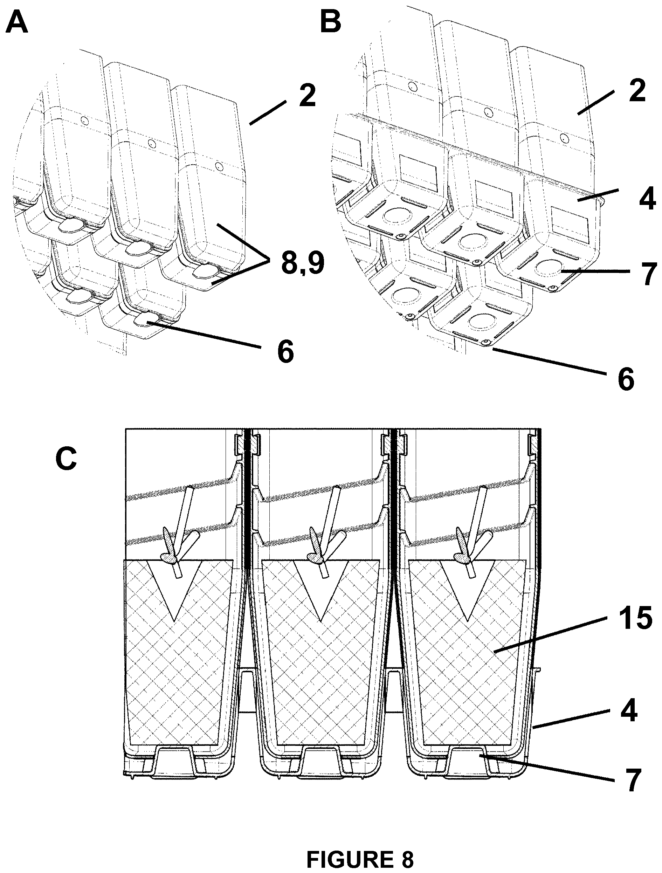

**Figure 8** illustrates in Figure 8A a particular embodiment of vases (2) for use in a cultivation system (1) envisaged herein and in Figure 8B a cultivation system comprising vases (2) positioned within a tray (4) according to an embodiment envisaged herein. The bottom of the vase comprises a draining hole (6). The cultivation tray (4) comprises a draining hole (6) and an elevation feature (7) at the bottom of each cup (5) of the tray.

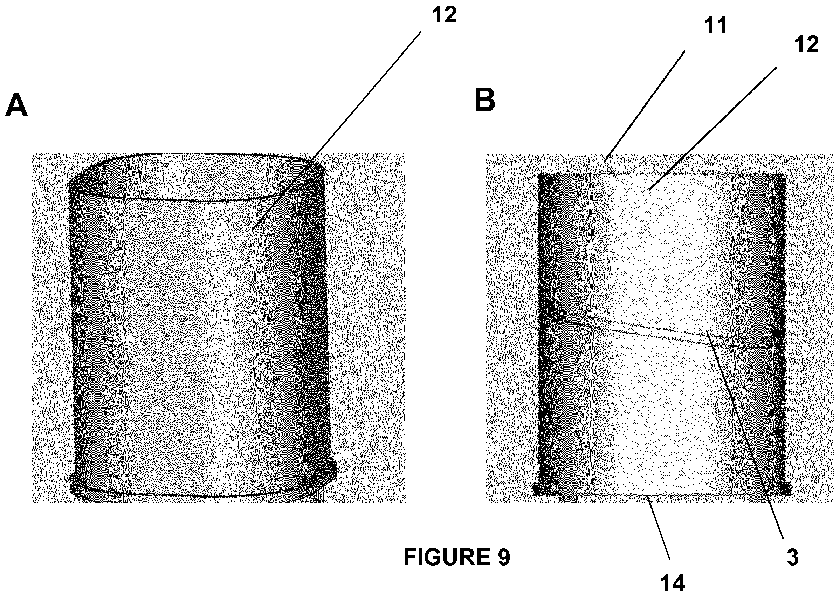

**Figure 9** illustrates a collar (12) of a cultivating vase as envisaged in particular embodiments herein. The collar (12) comprises a ridge (3) which extends circumferentially along the inner surface of the collar (12). In this particular embodiment, the ridge extends circumferentially along the inner surface of the collar at an angle with the upper edge (11) of the collar (12).
**Figure 10** illustrates a vase (2) with a collar (12) according a particular embodiment envisaged herein comprising a ridge (3) which extends circumferentially along the inner surface of the collar (4), wherein the vase further comprises longitudinal structures or arms (13) extending vertically from the lower edge (14) of the collar (12). In this particular embodiment the arms are interconnected and further comprise a gripping feature (9) in the form of a pin.

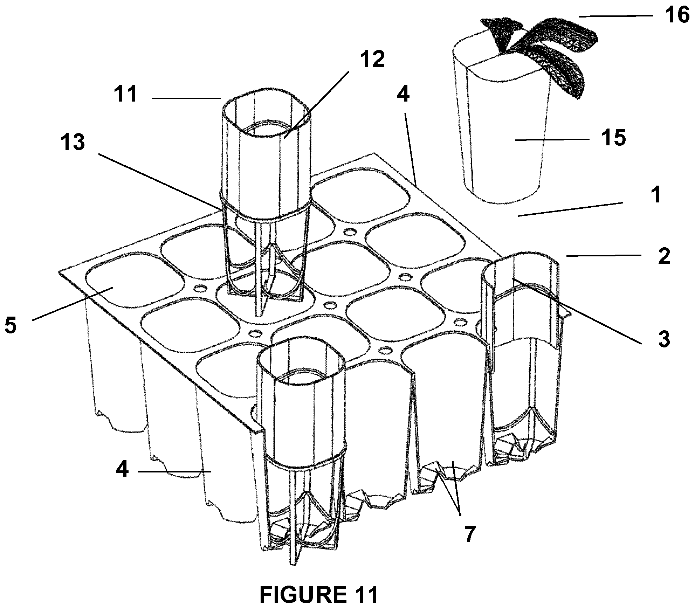

**Figure 11** illustrates a cultivation system (1) according to a particular embodiment envisaged herein comprising vases (2) an a cultivation tray (4), wherein each vase comprises a ridge (3) extending along the inner surface of the vase. In this embodiment each vase comprises a top part with a collar (12) and arms (8) extending therefrom forming the bottom part of the vase (2).

In the figures provided herein, the following numbering will be adhered to; 1: cultivation system; 2: vase; 3: ridge; 4: tray, 5: cup: 6: draining hole, 7: elevation feature; 8,9 parts of a vase; 10: locking feature; 11: upper edge of the vase (or the collar thereof); 12: collar; 13: arms; 14: lower edge of the collar of a vase; 15: substrate; 16: plant root; 17: pin; 21: inner surface of the vase; 31: upper surface of the ridge ; 32: lower surface of the ridge ; 23: inner surface of the vase above the ridge; 24: inner surface under the ridge.

### DETAILED DESCRIPTION OF THE INVENTION

By means of further guidance, definitions for the terms used in the description are included to better appreciate the teaching of the application.

According to one aspect the application provides systems for cultivating plants, which systems comprise two or more vases and a cultivating tray comprising two or more openings or cups for positioning said vases therein, the systems having particular characteristics which facilitate the cultivation of plants with particular features.

The systems envisaged herein are characterized in that each of the two or more vases comprises one or more ridges extending circumferentially along the inner surface of the vase. The inner surface of the vase as referred to herein is the surface of the lateral wall of the vase facing inward, i.e. toward the center of the vase. Indeed it has been found that the provision of a ridge on the inner surface of the vase can ensure that the aerial roots remain separated from the leaves of the plant during cultivation, without damaging the roots.

In particular, the term "ridge" (3) as used herein relates to a feature projecting from the inner surface (21) of a vase (2) towards the center. The region around the ridge on the inner surface of the vase can be divided in to a surface above the ridge (23) and the surface below the ridge (24). The plantlet roots growing from the lower half of the vase, along the surface below the ridge, towards the upper half of the vase will come in contact with the lower edge of the ridge. Indeed it has been found that the presence of a ridge on the inner surface of a cultivation vase ensures that the aerial roots grow along said ridge, such that they extend more horizontally along the inner wall of the vase rather than vertically.

The envisaged one or more ridges may have different patterns or designs. In particular embodiments, a ridge is provided which extends circumferentially along the inner surface of the vase along one line, whereby both ends of the ridge meet to form a continuous ridge. In alternative embodiments, the ridge extends circumferentially along the inner surface of only part of the vase. In this context "a part" implies at least 1/8 of the circumference of the vase, typically at least 1/4 of the circumference of the vase. However, where the ridge extends along only part of the surface of the vase, it is envisaged that combinations of different ridges ensure that, in total, a ridge is present along at least ½ of the circumference of the vase. In particular embodiments, different types of ridges extend circumferentially along different parts of the inner surface of the vase. These one or more ridges may extend horizontally, parallel to the edge of the vase or may run at an angle with the edge of the vase, and thus run obliquely with respect to the upper edge of the vase. In particular embodiments, the angle is between 5° and 50°, such as, but not limited to between 5° and 30°, more particularly the ridge may be at an angle of 10° with the upper edge of the vase.

In particular embodiments, the ridge follows a straight line. In alternative embodiments, the ridge is curved. More particularly, a ridge may follow a shape as described by a parabola, hemi circle, cosine, or hyperbolic cosine. In particular embodiments, different ridge types will be alternated though generally it will be of interest to maintain one shape circumferentially along the surface of the vase. Where the ridge forms a parabola or another shape, the angle with the edge of the vase will vary along the length of the ridge. Preferably, the shape of the ridge does not contain straight angles.

In particular embodiments, a ridge extends circumferentially along the inner wall of the vase in a spiral such that both ends of the ridge do not meet.

The ridges as envisaged herein are typically discrete structure. This implies that while they extend from the inner surface of the vase inwardly and thus are continuous therewith, they form a separate or clearly discernable structure on the surface of the vase. Each ridge extending circumferentially along the inner surface or inner wall of the vase may have any shape. In particular embodiments however, the ridges have the same shape. In particular embodiments, the one or more ridges are 1-5 mm size (total height extending from the wall of the vase), depending on the structure. However, typically the ridge is about 3mm in height and not more than 4 mm in height. Most particularly the ridge has a height of between 2-4 mm over its entire length. Typically, the height and shape of the ridge is continuous over its entire length. In particular embodiments a ridge is a structure extending at least 1mm from the wall of the vase so as to form an angle (which may be an overhang) with the wall of the vase. This ensures that the ridge can guide one or more aerial roots of the plant (a root growing along the bottom side of a ridge) as they extend from the substrate in the vase. In particular embodiments, at least the lower surface of the ridge (32) makes an essentially right angle with the vase surface. The term "essentially right angles" refers to any angle between 70° and 110°, preferably an angle between 70° and 95°, most preferably an angle of between 80 and 90°, such as between 85-90°.

Ridges may be rounded or angular in cross-section (i.e. with a cross-section that is triangular, rectangular an angle in the vase surface or the connection between two parts of the inner vase surface (as will be detailed below). The ridge may also extend in an angle or contain an angle directed to the bottom of the vase, forming a hook. It is further envisaged that a ridge can be continuous, dashed or dotted. In particular embodiments, the shape of the one or more ridges extending circumferentially along the inner surface of the vase is essentially continuous. However, as will be detailed below, depending on the design, the ridge need not be continuous over the entire circumference of the inner vase surface.

In particular embodiments, the inner surface of the vase is provided with multiple ridges parallel to each other.

When more than one ridge extends circumferentially along the inner surface of the vase, they can be evenly spaced or unevenly spaced between each other. In particular embodiments, the more than one ridges extending circumferentially along the inner surface of the vase, are evenly spaced between each other. In further particular embodiments, one or more of the ridges runs horizontally (i.e. typically parallel to the (horizontal) upper edge of the vase) and one or more ridges run at an angle with the (horizontal) upper edge of the vase, such that the different ridges do not run in parallel. In particular embodiments however, the different ridges do not cross each other.

The presence of the ridges on the inner side wall of the vase is particularly advantageous for guiding the aerial roots of the plant grown in the vase. Thus, it is envisaged that the position of the ridge should be such that it is just above the level of substrate when positioned in the vase, such that roots growing from said substrate will be guided by said ridge when touching the inner wall of the vase. Accordingly, at least one of the ridges as envisaged herein should at least be provided on the top half of the inner wall of the vase, more particularly the upper 1/3^{rd} of the vase. The presence of multiple ridges extending at different positions along the inner wall of the vase ensures the guidance also of roots which extend towards the inner wall at a higher level (e.g. later in the development of said plant).

In particular embodiments, the vase comprises only a ridge on the upper half of the surface of the vase (upper ridge). In particular embodiments, the vase comprises both a ridge in the lower half of the inner surface of the vase and one on the upper half of the surface of the vase (upper ridge). In particular embodiments, the ridge present on the lower half of the vase is similarly characterized in that at least the lower side of the ridge (32) forms an angle with the inner surface of the vase below the ridge (24). A ridge located on the lower half of the vase surface can guide the roots of the plantlet to grow horizontally along this ridge, i.e. remaining essentially below the ridge. The distance of the (top) ridge from the top edge of the vase is less critical. In particular embodiments, the one or more ridges extend at least 0.1 cm from the upper edge of the vase. In further particular embodiments, the ridges extend circumferentially at least 0.5cm from the upper edge of the vase. However it is further envisaged that a ridge may extend circumferentially along the upper edge of the vase. Preferably however, the vase comprises at least one ridge which extends at least 0.1 cm from the upper edge of the vase. It will be understood that where the ridge runs circumferentially along the inner wall of the vase at an angle with the upper edge of the vase, the distance from the upper edge of the vase will vary and the above-specified distances refer to the shortest distance of the ridge from the upper edge of the vase. In particular embodiments, the ridge is not formed by the upper edge of the vase.

In particular embodiments, the inner surface of the vase, more particularly the inner side wall is essentially continuous, except for the presence of the one or more ridges described herein and provisions for opening and closing the vase. Typically this implies that the side-walls of the vase are closed, as shown in Figures 1 to 8. Continuous side-walls ensure that aerial roots are guided smoothly along the inner surface without damage. More particularly the absence of large openings prevents the roots from extending outside the vase. It will be understood that the walls of the vase may however in particular embodiments comprise small openings, more particularly openings of less than 0.5mm in size, for aeration purposes. Preferably however, the inner surface of the wall of the vase is closed, so as to avoid any outgrowth of plant roots and to facilitate removal of the plant thereafter.

In particular embodiments, a ridge may be formed at least in part by a groove within the inner wall of the vase, provided this implies that the angle between the lower surface of the ridge and the inner surface of the vase below the ridge is maintained. However, in alternative particular embodiments, the ridge is not formed by a groove and is a discrete structure extending from the inner wall surface of the vase.

In particular embodiments the vase is circular in cross-section. In further embodiments, the cross-section may be square or even multi-angled. Preferably, where the cross-section is not circular, the angles are rounded.

The cultivating tray of the system envisaged herein comprises two or more openings (optionally forming cups) which are interconnected, whereby the openings fit the diameter of the vases described above. Thus the trays allow simultaneous handling of the different vases.

The nature of the trays may differ, depending on the nature of the vases as will be detailed below. Indeed, different designs of vases are envisaged for use in the systems described herein. However, it is envisaged that the combination of tray and vase should ensure a rigid environment for the substrate to be positioned therein and for the plant roots which will extend from the substrate. Thus, in particular embodiments, the vase comprises a solid wall from top edge to bottom so as to provide guidance for the plant roots extending from the substrate positioned therein. The tray for use herewith is mainly a support structure and need not be solid but may consist of interconnected bars forming a structure which supports the different vases.

In alternative embodiments, as will be described below, it is envisaged that the vase in fact corresponds to a collar, which is open-ended at both sides and is positioned on a tray comprising openings which form cups, such that the collar extends the cup to form a vase of the required height for supporting the substrate and plant roots during growth. In yet further alternative embodiments, the vase corresponds to a collar supported by arms extending downward from the lower edge of the collar to form a support structure, which fits within an opening in the tray. Here too, the tray preferably will comprise cups.

In general it will be understood that for the different embodiments, the envisaged total size (height and diameter) of the vases will be the same. The size of the vases is determined by the substrate to be used therewith, which itself is determined by the plant to be cultivated. The vases may thus generally have any shape, for example, it can be cuboid or a cone or pyramid with a truncated apex. Preferably, the diameter of the vase is slightly wider at the top than at the bottom.

In particular embodiments, the height of the individual vases (i.e. total height of structures forming the vase) can be between 5 and 20 cm. In particular embodiments, vases are provided which have a height of between 5 and 15 cm, more particularly between 6 and 14, such as between 7.5 and 12.5 cm; between 8.0 and 12 cm and more particularly between 9.5 and 10.5 cm. The diameter of the vases is typically between 2 and 7 cm, more particularly between 4 and 6 cm. It is furthermore envisaged that the vases may have an (inverted) frusto-conical shape such that the diameter at the upper end of the vase is larger than at the lower end of the vase. In particular embodiments, the diameter of the vase at the top is between 4 and 6 cm and the diameter at the bottom of the vase is between 3 and 5 cm, whereby the diameter at the top is larger than that at the bottom.

In particular embodiments it is envisaged that the vases comprise two (or more) pieces which can be assembled to form the vase. This allows disassembly of the vase for removal of the plant after its use. More particularly the vase is split up longitudinally into two parts such that the substrate and plant can be removed horizontally from the vase. In particular embodiments, one or both parts of the vase comprise locking features which ensure that the parts can be maintained in an assembled position. In particular embodiments, the locking features comprise a lip and groove system, a pin-and-hole system, a ratchet system or any other suitable system which allows connection of the two parts. Preferably the locking features are an integral part of the parts of the vase and are incorporated during production. However, it can be envisaged that the parts are maintained in assembled state by an external locking element, such as a sealing tape or elastic.

In particular embodiments, it is envisaged that the vase comprises one or more draining holes in the bottom of the vase. Typically the vase comprises one draining hole located centrally in the bottom of the vase. In particular embodiments, the draining hole is 0.5 and 2 cm in diameter, such as about 1cm in diameter. In further particular embodiments, the hole is provided with an elevation feature. This feature may be a ridge on the inner surface forming an elevation feature of the bottom of the vase to prevent roots from growing in the hole.

The material of the vases is not critical for the present invention but they are typically made of a thermoplastic synthetic material. For example, polystyrene, polypropylene, polyethylene or the like may be used. In particular embodiments, the vase is made of a different material than the cultivating tray. However, in further particular embodiments, the vase is made of the same material as the cultivating tray.

The vases described herein are envisaged for use in combination with a tray, which allows simultaneous handling of more than one vase. Thus, the application further provides trays for use in combination with two or more vases described herein.

The trays thus contain openings, optionally forming cups, for positioning of the vases therein which are interconnected. The exact nature of the interconnection is however not critical to the system envisaged herein. Thus, when referring to trays it should be understood to include cultivating trays wherein the openings or cups are connected by means of wires, beams, or by plate-like other structures extending between the openings or cups. To further stability and handling, the different openings or cups are typically interconnected at the same level, and more particularly closer to the upper end of the cup.

The general nature of the cultivating tray envisaged in the present context is not critical and may correspond to well-established cultivating trays. Typically, such trays are made of a thermoplastic synthetic material. For example polystyrene, polypropylene, polyethylene, polyester or the like, may be used.

The exact configuration of the tray is also not critical to the invention, but preferably contains features which facilitate the use of the vases in plant cultivation.

First the tray is configured such that it allows stable but non-permanent positioning of two or more vases as described herein thereon. To facilitate handling plates may be configured to comprise between 12-240 openings, including but not limited to 20, 28, 35, 42, 50, 54, 60, 66, 72, 80, 84, 102, 104, 120, 160 openings for vases per tray. In particular embodiments, the trays comprise between 50-90 openings for vases per tray.

The height of the tray will thus be dependent on the height of the vase and thus finally by the plant envisaged for cultivation and is not critical to the cultivation systems described herein. In particular embodiments, the cultivation tray has a height of between 3 and 9 cm such as between 3 and 5cm, preferably about 4 cm.

A further desirable advantage is that the tray allows aeration of the plant and draining of fluid from each vase. Where the tray comprises cups for positioning of the vases, this can be achieved more particularly by the provision of one or more holes in the cups of the tray, more particularly in the bottom of the cups in the tray. In addition, the tray may comprise one or more structures on the bottom of the cup, which ensures that when a vase with a substrate is positioned therein, the bottom of said substrate remains elevated above the lowest level of the cup of the tray. This further facilitates the draining of fluid from the substrate out of the vase. In particular embodiments, these one or more structures correspond to an elevation positioned on or as an integral part of part of the bottom of each of the cups in the tray. This will be illustrated with specific embodiments below.

In particular embodiments, the tray thus corresponds to a structure comprising cups, the size and shape of each of which allow positioning of a vase as described herein. In particular embodiments, the size and shape of the cups of the tray allow stable positioning of the vase therein, i.e. the internal size and shape of the cup of the tray corresponds essentially to the external size and shape of the bottom part of the vase to be positioned therein. Where the wall of the vase used in combination with the tray extends over the entire height of the vase (full vase system), the side walls of the cup of the tray need not be continuous but may contain holes, e.g. with the aim of reducing the weight of the tray. Where the vases consist only of a collar or the bottom of the side walls of the vase consists of a beams extending from a collar top part (collar vase system, see below), it is advantageous that the inner wall of the cup of the tray is continuous, forming an outer limit for roots extending from the substrate.

In particular embodiments, the diameter of the cup at the top of the tray is wider than at the bottom of the tray, corresponding to a conical size of the vases used therewith. For instance, the cup may have a diameter at the top of about 3 to 7cm and a bottom with a diameter of 2.5 to 5cm.

Examples of different embodiments of vase and tray combinations will be described herein below. It will be understood by the skilled person however that these are illustrative and that further embodiments can be developed within the limitations as set by the appended claims.

### Embodiment A - full vase system

In particular embodiments, the application provides systems for cultivating plants which comprise a tray with cups and vases for positioning therein, whereby the side of the vase extends fully over the entire height of the vase and the inner surface is essentially continuous. The vases comprise one or more ridges extending circumferentially along the inner surface of said vase, more particularly at least on the upper half of the inner wall of the vase. The variations envisaged for the ridges within the collars are those for the ridges described above.

In particular embodiments the vase is made of at least two parts which can be connected by interlocking features. This facilitates positioning and/or removal of the substrate in the vase. The nature of the structure of the trays used in combination with the vases in the full-vase system is less critical in that vases themselves provide the limited environment required to direct the roots extending from a substrate positioned therein. Thus the structure of the trays can contain openings or holes to reduce the weight of the tray.

Typically the vase has a cylindrical or frusto-conical shape. More particularly the diameter of the vase and the substrate to be used therewith are adjusted such that there is a minimal distance between the wall of the vase and the substrate when positioned therein. More particularly, upon placement of the substrate with a plant root in the vase (i.e. at the start of cultivation), the spacing between the wall of the substrate and the inner wall of the vase is at least 0.3 cm, more particularly between 0.3 cm and 1.7 cm. This implies that the diameter of the substrate holder is 0.6 to 3.4 cm smaller than the width or diameter of the vase. In particular embodiments, the space between the substrate holder and the vase increases towards the bottom of the vase, as a result of the fact that the diameter of the substrate holder decreases more strongly from top to bottom than the diameter of the vase. This will be further detailed below.

The bottom of the vases may be provided with an elevation feature which allows elevation of the substrate above the bottom of the vase. However, in particular embodiments, the bottom of the vase comprises an opening corresponding to an elevation feature provided in the tray. In these embodiments, an elevation feature of the tray may extend within the vases when these are positioned in the tray. This will again ensure that the substrate does not rest on the bottom of the vase.

Typically the bottom of the vase will contain one or more draining holes. This may be the same hole fitting the elevation feature of the tray or may be one or more different holes. In particular embodiments, the bottom of each cup of the tray also comprises one or more draining holes.

### Embodiment B - collar vase system

In particular embodiments, the application provides systems for cultivating plants which comprise a tray with cups and each vase corresponds to a collar positioned above each of said cups. The collars comprise one or more ridges extending circumferentially along the inner surface of said collar, such that, when the collar is positioned on the cup of the tray, said ridges are provided on the upper half part of the vase formed by the collar and the cup in the tray. The variations envisaged for the ridges within the collars are those for the ridges described above.

In particular embodiments, the collar may be an integral part of the tray, but preferably the collar is removable from the tray.

The collar extends vertically along the edge of the cup of the tray, extending the length of the vase at least 1cm beyond the height of the tray. Thus, in these embodiments, the collar corresponds essentially to a hollow cylinder of which the cross-section corresponds to the cross-section of an cup of the tray, so as to form an extension of the lateral wall(s) of the cup in the tray.

In these embodiments, the vase for positioning the substrate is formed by the collar provided on the cup of the tray. In this way, the total height of the vase (i.e. cup in tray + collar) is typically between 7 and 25 cm, more particularly between 7 and 16 cm. However, it will be understood by the skilled person that the actual total height of the vase is not critical to the systems described herein, and optimal height can be determined by the skilled person for the plant under consideration.

In particular embodiments, where the two or more collars constitute (one or more) separate part(s) removably positionable on each of the cups of the cultivating tray so as to form an extension of the cups, a collar may fit within the cup of the tray such that there is an overlap between the top wall of the cup and the bottom wall of the collar. In particular embodiments this overlap is between 0.5-2 cm, such as about 1cm. In particular embodiments, the collar has a height of 3-12 cm, more particularly 4-10 cm, or most particularly 5-8 cm. Where the collar is positioned within the cup of the tray so as to form a overlap with the upper edge of the cup, the height of the collar extending above the upper edge of the cup will be the height of the collar minus the height of the overlap.

In particular embodiments, where each of the vases is formed by a collar, the two or more collars may be interconnected. The interconnection of the collars may take different forms, such as described for the interconnection of the cups in the cultivation tray above. In particular embodiments, all collars for placement on a tray are interconnected, such that they can be positioned on and optionally removed from the tray simultaneously. In further embodiments, collars corresponding to one row or several rows of a tray are interconnected. In further particular embodiments, the connection between the collars is reversible (e.g. breakable) so as to allow separate removal of one or more collars from the connected collars.

In particular embodiments, and optionally in combination with the ridges described above, where the collar constitutes a separate part which can be positioned on the cup of a cultivation tray, a ridge may be formed by the connection of the collar with the cup, e.g. by an overhang of the inner surface of the cup relative to the collar or vice versa. In preferred embodiments however, a ridge is formed by the overhang of the collar relative to the inner surface of the cup. The ridge may thus be formed by at least part of the lower edge of the collar.

In particular embodiments, the height of the tray used in combination with a collar is such that the height of the vase to be placed therein extends at least 2 cm above the height of the tray, such that the upper rim of the vase, when positioned therein, extends at least 2 cm, more particularly at least 3 cm, preferably at least 4 cm, such as between 6 and 8 cm above the rim of the tray.

In particular embodiments, the collar is provided such that it rests upon the top edge of the cup of the tray, such that there is no overlap between the wall of the cup and the collar. In these embodiments, the collar may be reduced in diameter relative to that of the cup of the tray (e.g. by increasing the thickness of the walls of the collar), such that a ridge is formed by the lower edge of the collar.

However, in preferred embodiments, as detailed above, the collar can be provided such that it fits within the cup of the tray, and the lower edge of the collar forms a ridge relative to the inner surface of the cup in the tray.

In particular embodiments envisaged herein, the system for cultivating plants comprises vases comprising collars which possess arms which extend vertically along or from the edge of the collar and are joined at their distal ends to form the bottom of the vase. The structure formed by the collar in combination with the arms in these embodiments is typically suited to hold a solid substrate or a loose substrate plus holder fitting within the vase. In particular embodiments, the number of arms extending from the collar is limited, so as to allow optimal flux of oxygen and water to the substrate. In particular embodiments, four discrete arms extend from different points evenly spread around the circumference of the bottom part of the collar. This is illustrated in the Examples and Figure 10. In particular embodiments, the arms extending from the collar may comprise one or more gripping features, typically extending inwardly towards the center axis of the vase, which may help maintenance and/or fixation of a substrate within the vase. Such gripping features may be a pin or hook. In particular embodiments the arms are interconnected by essentially transverse bars. In further particular embodiments, the arms may on their external surfaces further comprise one or more features extending outwardly. Such features may help position the vase securely within an cup of the tray.

As detailed above, it is of interest that the system is provided with suitable means to ensure draining of the individual vases. Accordingly, where the receptacle forms by the cups of the tray have a solid bottom, they are preferably provided with one or more drain holes therein. This can allow aeration of the plant and removal of excess water from the vase.

Additionally or alternatively, upright ribs may be formed on the bottom of the receptacle formed by the cup in the tray, to form a surface above the bottom of the cup. The ribs are typically positioned such that the vase placed therein (or the substrate holder, where the vase is open-ended) can be supported by these ribs such as not to rest on the bottom of the cup. This will allow aeration of the plant and prevent the plant from standing in water which may accumulate at the bottom of the vase. In particular embodiments, said upright ribs measure between 0.4 and 1 cm in height. In particular embodiments, four ribs are formed on the bottom of the receptacle formed by the cup of the tray.

### Substrate holder

The cultivation trays described herein above can be used in combination with substrates which allow the cultivation of the plants. Such substrate can be a substrate plug.

The term "substrate plug" refers to a composite of fiber-rich plant substrate and an adhesive, which is then shaped in a mold, thereby producing a plug. The fiber-rich plant substrate may contain different suitable materials, such as coconut fibers, peat, rock wool. Suitable adhesive may comprise a heated thermoplastic synthetic material. Substrate plugs are well known in the art.

Examples include the Xtract Plug © (Quick Plug B.V),or the V-Xcel Plug© (Quick Plug B.V.), the Xcellent Plug© (Quick Plug B.V.) or a plug such as described in EP 2327293..

In particular embodiments however, the systems for cultivating plants as envisaged herein further comprise a substrate holder for positioning in a vase of the cultivation tray of the cultivation system envisaged herein. The term "substrate holder" as envisaged herein refers to a structure which can be filled with substrate, more particularly loose substrate. It has been found that the use of a substrate holder is particularly advantageous for cultivating plants with aerial roots. Typical substrates envisaged in the context of the cultivation systems described herein are soils which can be in powder or in fiber form. The loose substrate may contain a variety of materials such as tree bark (pine tree, cork), plastics (polystyrene, polyurethane foam), moss, coconut and coco products, peat, charcoal, rocks (lava rocks, pumice, perlite, rock wool), additives (sand, lime, gypsum), among others. The loose substrate may be highly porous or, alternatively, possess a high capillary effect. Such loose substrates allow for an optimum level of aeration and air humidity to circulate, as well as ensuring a sufficient supply of water to the plant.

Typically, the substrate holder is closed at one end, to ensure that the substrate is maintained within the substrate holder during cultivation.

Preferably, the substrate holder is made out of a biodegradable material, such as biodegradable polymers (polylactic acid), cellulosic fibers (paper, cardboard), vegetable material (coconut fibers, straw). The paper can be, for example, made of cellulose and a plastic polymer such as polyacrylamidepolyester, (such as but not limited to EP ellepot paper (Ellegaard A/S)). In particular embodiments, the substrate holder can be a net-like envelope.

In particular embodiments, the net-like substrate holder can be composed out of fibers of plastic, which are adhered to each other to provide a flexible and firm structure. The fibers can be arranged in a sticky state by heating, such that a net-like structure is formed by the plastic fibers. In particular embodiments, said plastic fibers comprise are made out of a biodegradable polymer (polylactic acid or polyacrylamidepolyester).

The mesh width of the peripheral wall of the net-like substrate holder may vary along the height of the peripheral wall. Preferably, the peripheral wall of said substrate holder has at least two zones of different mesh width. By varying the mesh width of the net like structure of the envelope wall, the direction of growth of the roots can be influenced. In particular embodiments, said net-like substrate holder is an envelope such as described in EP2399451 or a Spiderplug (Maan engineering B.V.).

In particular embodiments, the substrate holder has a predefined shape prior to filling. This shape may to some extent be influenced by the filling of the holder with substrate. The substrate holder envisaged herein may have any shape, provided it fits within the vases of the cultivating trays envisaged herein. For example, it can be a prism; a hexahedron (cuboid or a pyramid with a truncated apex), or a cone with a truncated apex. In particular embodiments, the substrate holder has the shape of a cone with a truncated apex (frustoconical).

In particular embodiments of the system envisaged herein, the envisaged size of the substrate holder is determined based on the height of the vases. Indeed it has been found that the use of the cultivation system as envisaged herein is particularly advantageous when the height of the vase extends above the substrate holder. Thus, in particular embodiments, the height of the substrate holder is less than the height of the vase, such that the vase extends above the surface of the substrate holder, when the latter is placed in the vase. In particular embodiments, the vase extends 2-10 cm above the substrate, more particularly 3 to 6 cm above the top edge of the substrate. It will be understood to the skilled person, that when the tray is provided with an elevation, the substrate holder will rest on the elevation and thus this further impacts the relative height of the substrate holder compared to the vase. It will be understood that while these relative heights can be important for the optimal functioning of the system, the absolute height of the vase and the substrate holder may vary and are not critical to the system envisaged herein. However, in particular embodiments, the substrate holder envisaged herein has a height of 4.0 to 7.5 cm; more particularly 5.5 to 7 cm; most particularly 5.8 to 6.4 cm.

It is envisaged that the width or diameter of the substrate holder in filled condition relative to the width of the vases will also influence the cultivation of the plant. This is detailed below.

### Cultivation systems

The application provides cultivation systems comprising combinations of the vases and trays whereby the structure of these elements is such that it ensures one or more the desirable features for plant cultivation as described herein. It will be understood by the skilled person that in typical embodiments of the systems envisaged herein the number of vases will correspond to the number of cups in the cultivation tray.

In particular embodiments, the cultivation systems further comprise substrate holders as described herein. In typical embodiments of the systems envisaged herein the number of substrate holders will correspond to the number of vases and the number of cups in the cultivation tray.

As indicated above, the inventors have found that the width or diameter of the substrate holder in filled condition relative to the width of the vases also influences the cultivation of the plant. Indeed, it has been found that it is advantageous for the cultivation of plants that there is a spacing between the substrate holder and the inner surface of the vase. Thus, this is contrary to what is envisaged in EP2399451 A1, where a system is provided whereby the envelope which is a net structure holding a substrate is in close contact with the vase wall. In particular embodiments this spacing is envisaged to be between 0.3 and 1.7 cm. Thus, in particular embodiments the width or diameter of the substrate holder is 0.6 to 3.4 cm smaller than the width or diameter of the vase. If the vase has a conical shape, the substrate holder may also have a conical shape, such that a spacing can be maintained or increased over the entire length of the substrate holder. In particular embodiments, the shape and/or cross-section of the vase and the substrate holder are different such that the spacing between the vase and the substrate holder varies. For instance, the vase may have an essentially square cross-section, while the substrate holder has a circular cross-section, such that the spacing between the vase and the substrate holder is not identical at all positions (e.g. corners vs. walls of the vase). In particular embodiments, the space between the substrate holder and the vase increases towards the bottom of the vase, as a result of the fact that the diameter of the substrate holder decreases more strongly from top to bottom than the diameter of the vase. It will be understood by the skilled person that the spacing between the wall of he substrate and the vase as envisaged herein is determined at the start of cultivation, i.e. upon positioning the substrate holder comprising a plant seedling or root in the vase. During cultivation, the spacing may decrease to some extent due to expansion of the substrate and may in some parts be taken up by plant parts such as roots.

In particular embodiments, the general shape of (at least the bottom part of) the vase is frusto-conical (the cone being inverted) and the general shape of the substrate is similarly frusto-conical.

### Automated systems

The systems described herein are particularly suitable for use in the automated handling of small plants during cultivation. Indeed, the ridges provided in the vases ensure that the roots of the plants are maintained within the vase, such that the vases can be manipulated without damage to the plant. Accordingly, the system as described herein may further possess one or more additional features that further facilitate automated handling of the trays and vases (i.e. movement of the tray, removal of individual vases from the tray, positioning of individual vases in a tray). Additionally or alternatively, the vases may be provided with one or more features which facilitate the introduction and/or removal of substrate and/or plant material. The systems envisaged herein particularly facilitate (automatic) sorting of the plants during cultivation. Indeed, as the vases can easily be removed from the tray at all times, individual vases can be sorted based on criteria e.g. of development of the plant present therein.

### Cultivation methods

The application further provides methods for cultivating plants which make use of the cultivation systems as envisaged herein. More particularly the systems are envisaged for use in the cultivation of plants with aerial roots. In particular embodiments, the application provides the use of the systems as described herein for cultivating epiphytes. Indeed it has been found that the systems described herein are particularly advantageous for the cultivation of plants with aerial roots, such as epiphytes.

As used herein, the term "epiphytes" refers to plants which grow on other plants without taking food from the latter. The term "epiphytes" refers in particular, to the botanical orders of the Bromeliaceae, Araceae and the Asparagales. More particularly, it refers to members of the Orchidacieae family. Most particularly, the term "epiphytes" refers to plants belonging to the genus Cattleya, Phalaenopsis and Dendrobium.

The present application thus also encompasses methods for cultivating plants, such as epiphytes, which involve using the cultivation systems as described herein. In particular embodiments, these methods encompass placing a root of an epiphyte in the substrate of a substrate holder and placing said substrate holder in a vase of the tray of the cultivation system envisaged herein. Thereafter, the root is provided with the care applicable to the plant concerned. In particular embodiments, the methods comprise making use of a substrate holder for a loose substrate as described above. Thus, in particular embodiments, the methods comprise the steps of
- placing a root of an epiphyte into a substrate holder
- filling said substrate holder with substrate
- positioning said substrate holder comprising said root and substrate in a vase of the system according to an embodiment described herein above and cultivating the epiphyte accordingly. Suitable cultivation conditions for epiphyte are known to the skilled person.

Optionally the method comprises removing said substrate holder from the vase and/or removing said vase from the tray when the plant has reached the desired stage of development.

In particular embodiments, where the vase is made of two parts which can be separated, the method of cultivating epiphytes as described above may involve cup the vase prior to positioning said substrate holder comprising said root and substrate in the vase and/or may comprise the step of cup the vase for removal of the substrate from the vase when the plant has reached the desired stage of development.

In particular embodiments, where the vase is formed by a collar positioned on the tray, the method for cultivating epiphytes as described herein, involves positioning a collar on each cup of said cultivating tray prior to, or after positioning said substrate holders in said collars on the cultivating tray.

Epiphytes such as Phalaenopsis are multiplicated as clones in lab conditions (*in vitro* culture). To ensure a good quality it is important that *in vitro* produced plants are adjusted to *in vivo* conditions. This process is called acclimatization.

The illustrated cultivation systems are developed to aid in this acclimatization process. The following examples are provided for the purpose of illustrating the present invention and by no means should be interpreted to limit the scope of the present invention.

### EXAMPLES

### 1. Cultivation systems with a full-vase system according to particular embodiments envisaged herein

Figure 1 illustrates a vase (2) for use according to a preferred embodiments of the application.

The vase is about 4.7x4.7x10,7(height) in size. This vase is envisaged for use in combination with a substrate holder (15) which is about 6cm in height when the plant root (16). The vase is characterized by the presence of two ridges (3) which extend obliquely along the inner surface of the top part of the vase.

Figure 2 provides a detail of a cross-section of an exemplary ridge (3) extending from the inner surface (21) of the vase. The ridge is characterized by an upper surface (31) and a lower surface (32). The inner surface of the vase can be divided in a surface above the ridge (23) and a surface below the ridge (24).

Figure 3 illustrates two parts of a vase (2) according to a particular embodiment envisaged herein. The inner surface (21) of the vase (2) comprises different types of ridges (3) in the upper part of the vase (2). Each of these ridges (3) runs circumferentially along part of the inner surface of the vase. A first type of ridges (3(a)) has a parabolic shape, while a second kind of ridges (3(b)) runs in a straight line. The ridges are present both in the upper half of the vase and in the lower half of the vase. The bottom of the vase comprises a draining hole. The rim of the draining hole is elevated out of the plane of the vase's bottom, thereby forming an elevation feature (7)

Figure 4 A and B illustrate two parts (8 and 9, respectively) of a vase (2) according to a particular embodiment envisaged herein. The parts (8,9) comprise locking features (10) configured for allowing a snap connection to be formed between the parts (8,9) when the locking features (10) of the two parts (8,9) interact. The inner surface (21) of the vase (2) comprises one parabolic ridge (3) extending circumferentially over the inner surface (21) of the vase (in the upper part of the vase (2)) as is evidenced from Figure 5 which demonstrates the vase according to this embodiment, when the two parts are locked. The bottom of the vase (2) here also comprises a draining hole (6). The rim of the draining hole (6) is elevated inwardly out of the plane of the vase's (2) bottom, thereby forming an elevation feature (7).

Figure 5. illustrates a side view (A) and a top view (B) of the vase according to the embodiment of Figure 4, whereby the two parts (8,9) are interlocked by way of locking features (10). The inner surface (21) of the vase (2) comprises one parabolic ridge (3) extending circumferentially over the inner surface (21) of the vase (2). The bottom of the vase (2) comprises a draining hole (6) for draining excess irrigation water.

Figure 6 further illustrates an embodiment of the vase wherein the vase is made up of a first and a second part (arbitrarily numbered as 8 and 9) as in Figure 1, wherein these parts are interlocked. The substrate (15) comprising the plantlet (16) is positioned within the vase The inner surface of the vase comprises two ridges (3) which run parallel to each other circumferentially along the inner surface of the vase.. The first and second part (8,9) of the vase interlock by way of interlocking locking features (10); in the illustrated embodiment the locking features comprise a tapered ridge (a) along the edge of the first part fitting within a tapered ridge along the edge (b) of the second part of the vase and a lip or flounce (c) extending from the edge of the upper side of the second part securing onto the inner side of the first part, when the tapered ridges interlock.

Figure 7 A and B illustrate a side view and a top view of a combination of a tray (4) with the vases (2) as described above. The tray (3) comprises cups (5) forming interconnected receptacles. The side view (A) illustrates that the vases (2) fit within the cups of the tray whereby the height of the vase (about 10 cm in total) extends about 6cm above the height of the tray which is about 4cm. The top view (B) schematically illustrate the substrate (15) with plant root (16) positioned within a vase in a tray (4)

Figure 8 A further provides a bottom side view of the vases (2) and Figure 8B and C provide a bottom side view and a transverse section respectively of the vases (2) positioned within a tray (4) according to a particular embodiments of the application. In the illustrated embodiments the vases (2) consist of two parts (8,9). In this embodiment, each of the vases (2) is provided with a central draining hole (6) which fits over a central elevation feature (7) in the bottom of the tray (4). In addition, the tray comprises smaller draining holes (6) at the bottom of each cup.

### 2. Cultivation system with a collar-vase system according to particular embodiments envisaged herein

Figures 9 and 10 illustrate a collar (12) of a vase (2) and the vase (2) comprising said collar as envisaged in particular embodiments herein, wherein the collar (12) of the vase is characterized by the presence of a ridge (3) which extends obliquely in one line along the inner surface of the collar. The vase (2) further comprises arms (8) extending vertically from the lower edge of the collar (7) and which are interconnected. In this embodiment, the arms interconnect at their respective ends to form a receptacle. In the illustrated embodiment, at the interconnection of the arms, a pin (9) is located which extends vertically upwards. This can be used to help secure a substrate or substrate holder within the collar structure.

Figure 11 further illustrates a system of cultivating plants comprising a cultivation tray (1) comprising multiple vases (2) and further comprising two or more collars (4), each collar fitting within a vase (2), whereby each collar (4) comprises a ridge (3) extending along the inner surface of the collar. In this embodiment, the collar (4) fits within the cup of a vase (2). The bottom part of the collar (7) is positioned within the vase (2), while the top edge of the collar (11) extends above the plate-like material (5) connecting the different vases (2)

The collar is further characterized by the presence of arms (8) which extend to form a receptacle. The receptacle is suitable for holding a substrate or substrate holder (6).It is further visible from Figure 11 that in this particular embodiment the bottom surface of the vase (2) contains discrete elevations (10) in its surface. When the substrate or substrate holder (6) is positioned through a collar (4) which is positioned within a vase (2), it rests on the elevations in the bottom of the vase.

In the illustrated embodiment, at the interconnection of the arms, a pin (17) is located which extends vertically upwards. This can be used to help secure a substrate or substrate holder within the collar structure.

### 3. Cultivating epiphytes making use of the cultivation system according to an embodiment as described herein

The present example describes the cultivation of epiphytes for the particular embodiment of the collar-vase system provided herein comprising a cultivation tray with vases and discrete collars to be placed thereon.

First, a root of an epiphyte is transferred from a cultivation plate into a substrate, which can be loose substrate in a substrate holder. A cultivation tray is provided with suitable vases, fitting into each of the cups of the tray. The substrate holder comprising the plant root is then placed in a vase and the vase is placed in the cultivation tray. Where the vases are in fact formed by collars placed onto the cups of the tray, or where the vase is a cup which does not open, the substrate can be placed directly into the cultivation tray through the collar or in the vase already positioned within the tray. Where the vases are cups which consists of two interlocking parts, the substrate comprising the plantlet can also be placed within one half of the cup, after which the cup is closed with the other half. The cup is then placed in the tray. The plant is then allowed to grow within the vase, the substrate holder being supported by the bottom of the vase and optionally elevation features of the tray.

As a result of the ridges present in the vases of the cultivation system, the aerial roots of each plant extend circumferentially along the inner wall of the vase. When the plant has grown to the desired size, it can be removed from the vase.

Where the vase consists of two interlocking parts, the parts can be separated to remove the substrate holder and plant from the vase. Where the vase is formed by the provision of a collar on the tray, the collar structure is removed from the tray together with the plant.

## Claims

1. A system (1) for cultivating plants with aerial roots comprising a cultivating tray (1) and at least two vases (2) having a height between 5-15 cm and a diameter of between 2 and 7 cm, said tray (1) comprising two or more openings for said vases (2), wherein each vase (2) comprises an inner surface (21) which is essentially continuous and one or more ridges (3) extending circumferentially along at least part of said inner surface (21), whereby each ridge is a discrete structure extending inwardly towards the center of said vase and forming an angle with the inner surface under the ridge, **characterized in that** the one or more ridges have a lower surface, the angle between the lower surface of the one or more ridges and the vase surface, is between 70° and 110°, preferably between 70° and 95°, most preferably between 80 and 90°, such as 85-90°, and the angle under the one or more ridges allows for the aerial roots to be guided within said vase horizontally.

2. The system (1) according to claim 1, wherein a vase (2) comprises at least one ridge (3) extending circumferentially along at least part of the upper half of the vase's inner surface (21) and optionally further comprises a ridge extending circumferentially along at least part of the lower half of the vase's (2) inner surface (21).

3. The system (1) according to any one of claims 1 or 2 wherein at least one of the one or more ridges (3) have a parabolic shape.

4. The system (1) according to any of claims 1 to 3, wherein the one or more ridges extend over the entire circumference of the vase.

5. The system (1) according to any one of claims 1 to 4 wherein the ridge (3) comprises a discrete structure extending to a height of about 3mm from the vase's (2) inner surface (21).

6. The system (1) according to any one of claims 1 to 5, wherein said vase has a circular cross-section.

7. The system (1) according to any one of claims 1 to 6, wherein the vases (2) comprise two parts (8,9) configured for allowing the vases (2) to be opened longitudinally.

8. The system (1) according to any one of claims 1 to 7, wherein the bottom of the vases (2) and/or the cultivating tray comprises one or more draining holes (7).

9. The system (1) according to any one of claims 1 to 8, wherein the system further comprises one or more substrate holders wherein
- each substrate holder is configured for being positionable in a vase (2);
- preferably, the substrate's holder diameter 0.60 to 3.4 cm smaller than the vase's (2) diameter;
- preferably, the substrate holder comprises a netted structure; and,
- preferably, the substrate holder comprises a loose substrate.

10. The system (1) according to any one of claims 1 to 9, wherein
- the openings of the trays form cups (5) for holding vases (2); and,
- the bottom of cups (5) and/or the bottom of vases (2) comprise an elevation feature for elevating substrate holders above the vase's (2) bottom.

11. Use of a system according to any one of claims 1 to 10 for the cultivation of epiphytes.

12. A method for cultivating epiphytes comprising the steps:
- placing a plantlet of an epiphyte into a substrate holder;
- filling the substrate holder with substrate;
- positioning the substrate holder in a vase (2) of a system according to any one of claims 1 to 10; and
- allowing said plantlet to grow in said substrate holder.

13. The method according to claim 12, wherein the vase is part of a system (1) according to claim 7, and wherein the method optionally comprises the step of opening the vase (2) for removing the substrate holder from the vase (2) when said plantlet has grown to the desired size.

## Patentansprüche

1. System (1) zum Anbau von Pflanzen mit Luftwurzeln, das eine Anbauschale (1) und mindestens zwei Vasen (2) mit einer Höhe zwischen 5-15 cm und einem Durchmesser zwischen 2 und 7 cm umfasst, wobei die Schale (1) zwei oder mehr Öffnungen für die Vasen (2) umfasst, wobei jede Vase (2) eine Innenfläche (21), die im Wesentlichen durchgängig ist, und einen oder mehrere Stege (3), die sich über den Umfang entlang mindestens einem Teil der Innenfläche (21) erstrecken, umfasst, wobei jeder Steg eine eigenständige Struktur ist, die sich zu der Mitte der Vase nach innen erstreckt und mit der Innenfläche unter dem Steg einen Winkel bildet,
**dadurch gekennzeichnet, dass**
der eine oder die mehreren Stege eine untere Fläche aufweisen, der Winkel zwischen der unteren Fläche des einen oder der mehreren Stege und der Vasenfläche zwischen 70° und 110°, vorzugsweise zwischen 70° und 95°, am stärksten bevorzugt zwischen 80° und 90°, wie z. B. 85-90°, beträgt und der Winkel unter dem einen oder den mehreren Stegen gestattet, dass die Luftwurzeln in der Vase horizontal geführt werden.

2. System (1) nach Anspruch 1, wobei eine Vase (2) mindestens einen Steg (3) umfasst, der sich über den Umfang entlang mindestens einem Teil der oberen Hälfte der Vaseninnenfläche (21) erstreckt, und optional ferner einen Steg umfasst, der sich über den Umfang entlang mindestens einem Teil der unteren Hälfte der Innenfläche (21) der Vase (2) erstreckt.

3. System (1) nach einem der Ansprüche 1 oder 2, wobei mindestens einer des einen oder der mehreren Stege (3) eine parabolische Form aufweist.

4. System (1) nach einem der Ansprüche 1-3, wobei sich der eine oder die mehreren Stege über den gesamten Umfang der Vase hinweg erstrecken.

5. System (1) nach einem der Ansprüche 1-4, wobei der Steg (3) eine eigenständige Struktur umfasst, die sich auf eine Höhe von etwa 3 mm von der Innenfläche (21) der Vase (2) erstreckt.

6. System (1) nach einem der Ansprüche 1-5, wobei die Vase einen kreisförmigen Querschnitt aufweist.

7. System (1) nach einem der Ansprüche 1-6, wobei die Vasen (2) zwei Teile (8, 9) umfassen, die dazu konfiguriert sind, das längsseitige Öffnen der Vasen (2) zu gestatten.

8. System (1) nach einem der Ansprüche 1-7, wobei der Boden der Vasen (2) und/oder der Anbauschale ein oder mehrere Ablauflöcher (7) umfasst.

9. System (1) nach einem der Ansprüche 1-8, wobei das System ferner einen oder mehrere Substrathalter umfasst, wobei
- jeder Substrathalter dazu konfiguriert ist, in einer Vase (2) positionierbar zu sein;
- vorzugsweise der Durchmesser des Substrathalters 0,60 bis 3,4 cm kleiner als der Durchmesser der Vase (2) ist;
- vorzugsweise der Substrathalter eine Netzstruktur umfasst; und
- vorzugsweise der Substrathalter ein loses Substrat umfasst.

10. System (1) nach einem der Ansprüche 1-9, wobei
- die Öffnungen der Schalen Näpfe (5) zum Halten der Vasen (2) bilden; und
- der Boden der Näpfe (5) und/oder der Boden der Vasen (2) ein Hebelmerkmal zum Heben von Substrathaltern über den Boden der Vase (2) umfassen.

11. Verwendung eines Systems nach einem der Ansprüche 1-10 zum Anbau von Epiphyten.

12. Verfahren zum Anbau von Epiphyten, das die folgenden Schritte umfasst:
- Platzieren einer Jungpflanze eines Epiphyten in einen Substrathalter;
- Füllen des Substrathalters mit Substrat;
- Positionieren des Substrathalters in einer Vase (2) eines Systems nach einem der Ansprüche 1-10; und
- Wachsenlassen der Jungpflanze in dem Substrathalter.

13. Verfahren nach Anspruch 12, wobei die Vase Teil eines Systems (1) nach Anspruch 7 ist und wobei das Verfahren optional den Schritt des dahingehenden Öffnens der Vase (2), den Substrathalter aus der Vase (2) zu entfernen, wenn die Jungpflanze auf die Sollgröße gewachsen ist, umfasst.

## Revendications

1. Système (1) permettant de cultiver des plantes possédant des racines aériennes comprenant un plateau de mise en culture (1) et au moins deux vases (2) ayant une hauteur entre 5 et 15 cm et un diamètre entre 2 et 7 cm, ledit plateau (1) comprenant deux ouvertures ou plus pour lesdits vases (2), dans lequel chaque vase (2) comprend une surface interne (21) qui est sensiblement continue et une ou plusieurs nervures (3) s'étendant circonférentiellement le long d'au moins une partie de ladite surface interne (21), moyennant quoi chaque nervure est une structure discrète s'étendant vers l'intérieur en direction du centre dudit vase et formant un angle avec la surface interne sous la nervure,
**caractérisé en ce que** la ou les nervures ont une surface inférieure, l'angle entre la surface inférieure de la ou des nervures et la surface du vase étant entre 70° et 110°, de préférence entre 70° et 95°, mieux encore entre 80 et 90°, notamment 85 à 90°, et l'angle sous la ou les nervures permettant que les racines aériennes soient guidées horizontalement à l'intérieur dudit vase.

2. Système (1) selon la revendication 1, dans lequel un vase (2) comprend au moins une nervure (3) s'étendant circonférentiellement le long d'au moins une partie de la moitié supérieure de la surface interne (21) du vase et éventuellement comprend en outre une nervure s'étendant circonférentiellement le long d'au moins une partie de la moitié inférieure de la surface interne (21) du vase (2).

3. Système (1) selon l'une quelconque des revendications 1 et 2, dans lequel au moins une de la ou des nervures (3) a une forme parabolique.

4. Système (1) selon l'une quelconque des revendications 1 à 3, dans lequel la ou les nervures s'étendent sur toute la circonférence du vase.

5. Système (1) selon l'une quelconque des revendications 1 à 4 dans lequel la nervure (3) comprend une structure discrète s'étendant à une hauteur d'environ 3 mm depuis la surface interne (21) du vase (2).

6. Système (1) selon l'une quelconque des revendications 1 à 5, dans lequel ledit vase a une coupe transversale circulaire.

7. Système (1) selon l'une quelconque des revendications 1 à 6, dans lequel les vases (2) comprennent deux parties (8, 9) conçues pour permettre que les vases (2) soient ouverts longitudinalement.

8. Système (1) selon l'une quelconque des revendications 1 à 7, dans lequel le fond des vases (2) et/ou du plateau de mise en culture comprend un ou plusieurs orifices de drainage (7).

9. Système (1) selon l'une quelconque des revendications 1 à 8, le système comprenant en outre un ou plusieurs supports de substrat dans lequel
- chaque support de substrat est conçu pour pouvoir être positionné dans un vase (2) ;
- de préférence, le diamètre du support de substrat est plus petit de 0,60 à 3,4 cm que le diamètre du vase (2) ;
- de préférence, le support de substrat comprend une structure en filet ; et,
- de préférence, le support de substrat comprend un substrat lâche.

10. Système (1) selon l'une quelconque des revendications 1 à 9, dans lequel
- les ouvertures des plateaux forment des coupelles (5) destinées à tenir les vases (2) ; et,
- le fond des coupelles (5) et/ou le fond des vases (2) comprennent une caractéristique d'élévation permettant d'élever les supports de substrat au-dessus du fond des vases (2).

11. Utilisation d'un système selon l'une quelconque des revendications 1 à 10 pour la culture d'épiphytes.

12. Procédé de mise en culture d'épiphytes comprenant les étapes consistant à :
- placer une plantule d'un épiphyte dans un support de substrat ;
- remplir de substrat le support de substrat ;
- positionner le support de substrat dans un vase (2) d'un système selon l'une quelconque des revendications 1 à 10 ; et
- laisser pousser ladite plantule dans ledit support de substrat.

13. Procédé selon la revendication 12, dans lequel le vase fait partie d'un système (1) selon la revendication 7, et dans lequel le procédé comporte éventuellement l'étape consistant à ouvrir le vase (2) pour retirer le support de substrat du vase (2) lorsque ladite plantule a atteint la taille souhaitée.
